# EUROPÄISCHE PATENTSCHRIFT

(11) **EP 3 069 433 B1**
(45) Veröffentlichungstag und Bekanntmachung des Hinweises auf die Patenterteilung: **10.10.2018**
(21) Anmeldenummer: 14757842.1
(22) Anmeldetag: 01.08.2014
(51) Int. Cl.: H02K 5/22, H02K 11/33

(54) **ELEKTROMOTORISCHES ANTRIEBSSYSTEM**
ELECTROMOTIVE DRIVE SYSTEM
SYSTÈME D'ENTRAÎNEMENT PAR MOTEUR ÉLECTRIQUE

(30) Priorität: 13.11.2013 DE 202013010294 U
(43) Veröffentlichungstag der Anmeldung: 21.09.2016
(73) Patentinhaber: Baumüller Nürnberg GmbH, 90482 Nürnberg (DE)
(72) Erfinder: SCHRÖDEL, Georg, 90459 Nürnberg (DE)
(74) Vertreter: FDST Patentanwälte
(86) Internationale Anmeldenummer: PCT/EP2014/002133
(87) Internationale Veröffentlichungsnummer: WO 2015/070936

(56) Entgegenhaltungen:
- EP-A1- 0 577 201
- EP-A1- 1 460 748
- EP-A1- 1 780 844
- EP-A2- 0 570 181
- EP-A2- 1 353 412
- EP-A2- 2 482 427
- WO-A1-2012/003347
- DE-C1- 19 707 120
- DE-U1- 29 521 213
- DE-U1- 29 723 145
- DE-U1-202005 020 857
- DE-U1-202008 003 138
- DE-U1-202012 103 360
- US-A- 5 125 854
- US-A1- 2010 151 723
- US-A1- 2011 287 642
- US-A1- 2012 056 572
- US-A1- 2012 161 590
- US-A1- 2012 286 604
- US-A1- 2012 286 630
- US-A1- 2013 122 737
- "ANSCHLUSSTECHNIK UND DEZENTRALISIERUNG", MESSEN UND PRUFEN, IVA INTERNATIONAL, MUNCHEN, DE, Bd. 36, Nr. 6, 1. Juni 2000 (2000-06-01), Seiten 16,18-21, XP001100990, ISSN: 0937-3446
- "SERVOMOTOR BUNDLES COMPONENTS IN A SMALL PACKAGE", MACHINE DESIGN, PENTON MEDIA, CLEVELAND, OH, US, Bd. 70, Nr. 9, 21. Mai 1998 (1998-05-21), Seite 62, XP000827087, ISSN: 0024-9114

## Beschreibung

Die Erfindung betrifft ein elektromotorisches Antriebssystem mit einem motorseitig angeordneten Elektronikgehäuse, insbesondere zur Aufnahme von Umrichterkomponenten.

Aus der EP 2 482 427 A2 ist ein elektrischer Antrieb mit einem Elektromotor bekannt, welcher ein Gehäuse mit einem Anschlussbereich aufweist. Der Anschlussbereich weist elektrische Anschlusskontakte zum Verbinden des Antriebs mit externen elektrischen Anschlussleitungen auf. Die Anschlusskontakte sind hierbei an einem lösbar mit dem Elektromotor verbindbaren Gehäuseteil angeordnet, welches wahl- oder wechselweise an unterschiedlichen Verbindungsstellen des Elektromotors angeordnet werden kann.

Aus der US 2010/0151723 A1 ist eine Steckverbindervorrichtung bekannt. Die Steckverbindervorrichtung weist ein Gehäuse mit einem ausgangsseitigen ersten Steckverbinder auf, welcher gehäuseintern mittels einer Leiterplatte mit einem eingangsseitigen ersten Anschlusskabel mit einem zweiten Steckverbinder signaltechnisch gekoppelt ist. Die Steckverbindervorrichtung weist eingangsseitig ein zweites Anschlusskabel mit einem dritten Steckverbinder auf.

Beispielsweise im Bereich energetisch und/oder daten- bzw. signaltechnisch vernetzter Antriebssysteme, insbesondere im Bereich der Anlagentechnik, ist es häufig wünschenswert, ein elektromotorisches Antriebssystem bereit zu stellen, das möglichst kompakt aufgebaut ist. Zudem soll einerseits ein dezentraler Antrieb bereitgestellt und andererseits ein versorgungs-, signal- und/oder kommunikationstechnisches Zusammenwirken mit weiteren (dezentralen) Antrieben ermöglicht werden können. Die Kommunikation sollte möglichst über Bussysteme, beispielsweise über Ether-CAT, erfolgen können. Ferner sollten eine Antriebselektronik und Softwarekomponenten sowie möglichst auch eine Antriebsmechanik im Antriebssystem weitestgehend vereint sein.

Hierzu ist erfindungsgemäß ein elektromotorisches Antriebssystem nach Anspruch 1 mit einem motorseitig angeordneten Elektronikgehäuse und mit einem mit diesem lösbar steckkontaktierten Anschlussgehäuse vorgesehen. Das Anschlussgehäuse dient zum Anschluss von Anschlussleitungen zumindest zweier Anschlusskabel, welche die Anschlussleitungen führen. Das Anschlussgehäuse ist zudem vorzugsweise dazu vorgesehen und eingerichtet, zumindest eine Energieversorgung des Antriebssystems von einem der Anschlusskabel zum anderen Anschlusskabel und damit von oder zu einem weiteren Antriebssystem durchzuschleifen. Hierzu ist das Anschlussgehäuse gehäuseintern mit Mitteln zur Durchkontaktierung zumindest bestimmter Anschlussleitungen der Anschlusskabel versehen.

Die Steckverbindung zwischen dem Anschlussgehäuse und dem Elektronikgehäuse erfolgt über Steck- und Gegensteckverbindungen, die an einander zugewandten Steckkontaktseiten des Anschlussgehäuses einerseits und des Elektronikgehäuses andererseits vorgesehen sind. Das Anschlussgehäuse weist zudem eine der Steckkontaktseite gegenüberliegende Front- oder Anschlussseite auf, um die Anschlusskabel und insbesondere die von diesen geführten Anschlussleitungen in das Gehäuseinnere des Anschlussgehäuses zu führen, und um gehäuseintern die Kontaktierung der Leitungsenden der einzelnen Anschlussleitungen vorzunehmen.

Nach erfolgter Kontaktierung der einzelnen Anschlussleitungen innerhalb des Anschlussgehäuses stellt dieses quasi einen für beide Anschlusskabel gemeinsamen Steckverbinder nach Art eines T-Steckverbinders dar, so dass vermittels des Anschlussgehäuses beide Anschlusskabel gemeinsam und zeitgleich mit dem Elektronikgehäuse steckkontaktiert werden. Besonders vorteilhaft ist hierbei, dass aufgrund der Durchkontaktierung und damit des Durchschleifens insbesondere der Energieversorgung beziehungsweise der entsprechenden Anschlussleitungen auch bei gelöster Steckverbindung zwischen dem Anschlussgehäuse und dem Elektronikgehäuse ein dem entsprechenden Anschlusskabel zugeordneter weiterer Antrieb beziehungsweise ein weiteres elektromotorisches Antriebssystem weiterhin energetisch versorgt ist.

Ebenso kann durch entsprechende Kontaktierung innerhalb des Anschlussgehäuses die Verbindung beziehungsweise Verknüpfung zwischen von den beiden Anschlusskabeln geführten Anschlussleitungen (Signal- und/oder Datenleitungen) auch dann erhalten bleiben, wenn die Steckverbindung zwischen dem Anschlussgehäuse und dem Elektronikgehäuse des entsprechenden elektromotorischen Antriebssystems gelöst ist.

Die von den Anschlusskabeln geführten Anschlussleitungen sind insbesondere Versorgungsleitungen für eine Zwischenkreisgleichspannung im Bereich von beispielsweise 60V(DC) bis 800V(DC) zur energetischen Versorgung des Elektromotors, insbesondere aus einem Gleichspannungszwischenkreis, sowie für eine Versorgungsgleichspannung mit beispielsweise 24V(DC) zur energetischen Versorgung von Elektronikkomponenten zur Steuerung oder Regelung des Elektromotors.

Zur Anschlusskontaktierung der von den Anschlusskabeln geführten Anschlussleitungen innerhalb des Anschlussgehäuses weist das Anschlussgehäuse frontseitig mindestens eine Kabelöffnung zum Durchführen der von diesen Anschlusskabeln geführten Anschlussleitungen in den Gehäuseinnenraum des Anschlussgehäuses auf. Dort ist gehäuseintern vorzugsweise eine die Steckverbindungen bzw. deren Kontaktstellen tragende Leiterplatte vorgesehen. Die Anschlusskabel benötigen kabelendseitig keinen den Anschlussleitungen gemeinsamen stecker- und/oder buchsenartigen Steckverbinder, da dieser für beide Anschlusskabel inklusive der Durchkontaktierung vom gemeinsamen Anschlussgehäuse hergestellt ist.

Nachfolgend wird ein Ausführungsbeispiel der Erfindung anhand einer Zeichnung näher erläutert. Darin zeigen:
- Fig. 1a und 1b: in Seitenansicht beziehungsweise in einer gehäuseseitigen Frontansicht ein elektromotorisches Antriebssystem mit motorseitigem (integralem) Elektronikgehäuse inklusive montiertem Anschlussgehäuse,
- Fig. 2: in perspektivischer Darstellung das Antriebssystem bei gelöster Steckverbindung zwischen dem Elektronikgehäuse und dem Anschlussgehäuse mit Blick auf Steck- und Gegensteckverbindungen der entsprechenden Gehäuseseiten des Elektronikgehäuses und des Anschlussgehäuses, und
- Fig. 3: schematisch den Anschluss von Anschluss- oder Verbindungsleitungen zweier Anschlusskabel im Anschlussgehäuse.

Einander entsprechende Teile sind in allen Figuren mit den gleichen Bezugszeichen versehen.

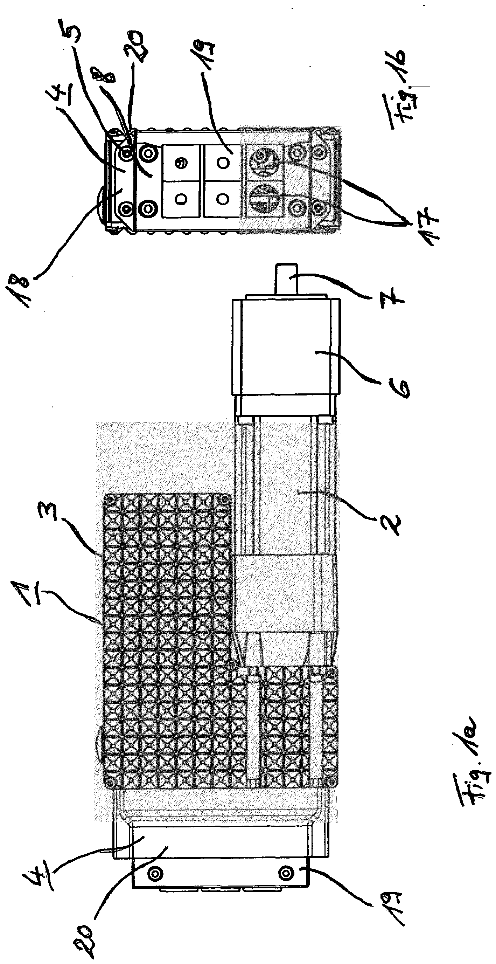

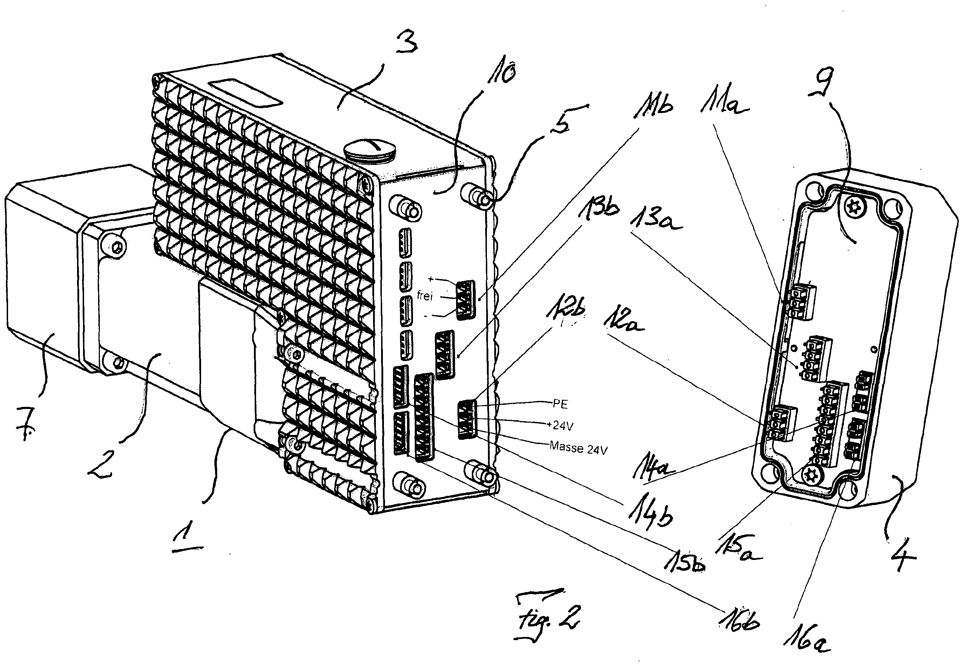

Das elektromotorische Antriebsystem 1 gemäß den Figuren 1 und 2 umfasst einen Elektromotor in einem Motorgehäuse 2, an dem ein Elektronikgehäuse 3 und ein Anschlussgehäuse 4 angeordnet sind, das mit dem Elektronikgehäuse 3 lösbar steckkontaktiert und beispielsweise mittels einer Verschraubung 5 mechanische verbunden ist. Das Elektronikgehäuse 3 ist im Ausführungsbeispiel L-förmig und erstreckt sich teilweise über die Längsseite sowie über eine Gehäuseschmal- oder Stirnseite des Motorgehäuses 2. An der dem Elektronikgehäuse 3 abgewandten Stirnseite des Elektromotors ist aus dessen Motorgehäuse 2, beispielsweise über ein Getriebe 6, die Motor- oder Getriebewelle 7 herausgeführt.

Während Figur 1b das Anschlussgehäuse 4 von dessen Anschluss- oder Frontseite 8 her zeigt, ist in Figur 2 in der rechten Figurenhälfte das Anschlussgehäuse 4 mit Blick auf dessen Steckkontaktseite 9 mit dort angeordneten Steckverbindungen 11a bis 16a gezeigt. Diese Steckverbindung 11a bis 16a korrespondieren mit Gegensteckverbindungen 11b bis 16b auf der dem Anschlussgehäuse 4 beziehungsweise dessen Steckkontaktseite 9 zugewandten Gehäuse- oder Steckkontaktseite 10 des Elektronikgehäuses 3.

Im Einzelnen sind eine einzige Steckverbindung 11a, 11b für eine Zwischenkreisgleichspannung mit beispielsweise größer 50V_{DC} und kleiner 800V_{DC} vorgesehen.

Eine weitere einzelne Steckverbindung 12a, 12b ist für eine Versorgungsgleichspannung 50V, insbesondere 24V_{DC}, vorgesehen. Eine weitere Steckverbindung 14a, 14b ist für einen Feldbuseingang vorgesehen, während ferner eine Steckverbindung 16a, 16b für einen Feldbusausgang vorgesehen ist. Ein weitere Steckverbindung 15a, 15b dient als Digitaleingang und Digitalausgang. Zudem dient eine Steckverbindung 13a, 13b als Sicherheitsanschluss (STO-Technik).

Innerhalb des Anschlussgehäuses 4 und somit gehäuseintern erfolgt in nicht näher dargestellter Art und Weise die Kontaktierung von Anschlussleitungen Lₙ zweier Anschlusskabel Kₙ. Diese werden über Kabelöffnungen 17 (Figur 1b) an der Frontseite 18 des Anschlussgehäuses 4 in dieses hinein geführt. Die Anschlusskontaktierung der Leitungsenden der Anschlusskabel Lₙ erfolgt somit gehäuseintern innerhalb des Anschlussgehäuses 4 mit Kontaktstellen der jeweiligen Steckverbindungen 11 bis 16.

Die Kabelöffnungen 17 können gemäß dem Ausführungsbeispiel nach Figur 1b in einer Frontplatte 19 vorgesehen sein, die mit einem entsprechenden Gehäuseteil 20 des Anschlussgehäuses 4 lösbar verbunden ist. Zur Montage und Kontaktierung ist bei dieser Ausführungsform die Frontplatte 19 zunächst vom übrigen Gehäuseteil 20 des Anschlussgehäuses 4 gelöst und die Anschlusskabel Kₙ sind durch die Kabelöffnungen 17 hindurch geführt. In diesem Montagezustand können die Leitungsenden der von den Anschlusskabeln Kₙ geführten Anschlussleitungen Lₙ mit den jeweiligen Kontaktstellen der entsprechenden Steckverbindungen 11a bis 16a durch Schraub-, Klemm- oder Steckverbindung hergestellt werden.

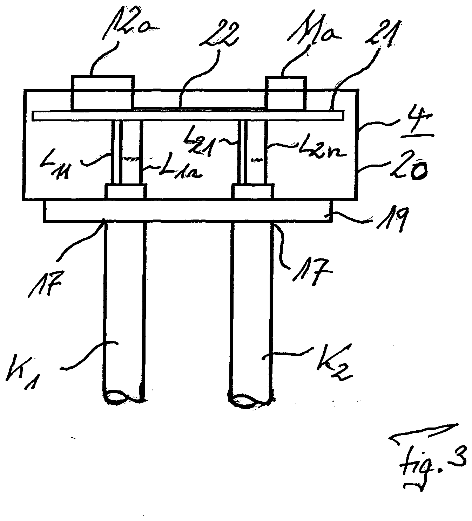

Bei gemäß Figur 3 innerhalb des Anschlussgehäuses 4 kontaktierten Anschlussleitungen Lₙ sind vermittels einer gehäuseinternen Leiterplatte 21 auch Durchkontaktierungen zwischen zumindest den mit den Steckverbindungen 11a, 12a kontaktierten und von den Anschlusskabeln K₁ und K₂ geführten Versorgungsleitungen L₁₁ bis L₁ₙ bzw. L₂₁ bis L₂ₙ in Form von Kontaktbrücken 22 oder der gleichen hergestellt. Auf diese Weise ist ein Durchschleifen der Energieversorgung von einem der Anschlusskabel K₁ zum anderen Anschlusskabel K₂ innerhalb des Anschlussgehäuses 4 hergestellt. Ein Durchschleifen der Energieversorgung, insbesondere zwischen zwei energie- und datentechnisch vernetzten Antriebssystemen, bleibt auch dann erhalten, wenn die Steckverbindung 11 bis 16, insbesondere die Steckverbindung 11 und 12 zur Energieversorgung einer Umrichterelektronik des Elektromotors und/oder einer Steuerungs-, Regelungs-, Sensor-, Aktor- und/oder Kommunikationselektronik, zwischen dem Elektronikgehäuse 3 und dem Anschlussgehäuse 4 entsprechend der Darstellung nach Figur 2 gelöst ist.

Das Anschlussgehäuse 4 übernimmt somit die Funktion eines T-Verbinders mit jeweils nur einer einzigen Steckverbindung 11 bis 16 für die entsprechenden Anschlussleitungen Lₙ beider Anschlusskabel Kₙ bei gleichzeitige stets aufrecht erhaltener Durchschleifung zumindest der Versorgungspannungen und somit zur Aufrechterhaltung der Energieversorgung eines vor- oder nachgeordneten Antriebssystem.

### Bezugszeichenliste

- 1: Antriebssystem
- 2: Motorgehäuse
- 3: Elektronikgehäuse
- 4: Anschlussgehäuse
- 5: Verschraubung
- 6: Getriebe
- 7: Motor-/Getriebewelle
- 8: Anschluss-/Frontseite
- 9: Steckkontaktseite
- 10: Gehäuse-/ Steckkontaktseite
- 11a bis 16a: Steckverbindungen
- 11b bis 16b: Gegensteckverbindung
- 17: Kabelöffnung
- 18: Frontseite
- 19: Frontplatte
- 20: Gehäuseteil
- 21: Leiterplatte
- 22: Kontaktbrücke

- Kₙ: Anschlusskabel
- Lₙ: Anschluss-/Verbindungsleitung

## Patentansprüche

1. Elektromotorisches Antriebssystem (1) mit einem Motorgehäuse (2) und mit einem motorseitig angeordneten Elektronikgehäuse (3) sowie mit einem mit diesem lösbar steckkontaktierten Anschlussgehäuse (4) zum Anschluss von Anschlussleitungen (Lₙ), wobei das Anschlussgehäuse (4) eine Steckkontaktseite (9) mit einer Anzahl von Steckverbindungen (11a bis 16a) und eine Anschlussseite (8, 18) aufweist, und wobei das Elektronikgehäuse (3) eine der Steckkontaktseite (9) zugewandte Gehäuseseite (10) mit zu Steckverbindungen (11a bis16a) korrespondierenden Gegensteckverbindungen (11b bis 16b) aufweist,
**dadurch gekennzeichnet,**
- **dass** die Anschlussseite (8, 18) des Anschlussgehäuses (4) Anschlussöffnungen (17) für zumindest zwei jeweils Anschlussleitungen (Lₙ) enthaltende Anschlusskabel (K₁, K₂) aufweist,
- **dass** innerhalb des Anschlussgehäuses (4) eine Anschlussleiterplatte (21) vorgesehen ist, an welche die beiden Anschlusskabel (K₁, K₂) geführt sind, wobei gehäuseintern die Kontaktierung der Anschlussleitungen (Lₙ) der beiden Anschlusskabel (K₁, K₂) mit den Steckverbindungen (11a bis 16a) erfolgt, und
- **dass** das Anschlussgehäuse (4) dazu vorgesehen und eingerichtet ist, zumindest eine Energieversorgung des Antriebssystems (1) von einem der beiden Anschlusskabel (K₁, K₂) zum anderen der beiden Anschlusskabel (K₁, K₂) durchzuschleifen, indem innerhalb des Anschlussgehäuses (4) eine Durchkontaktierung der Anschlusskabel (K₁, K₂) oder der von diesen geführten Anschlussleitungen (Lₙ) erfolgt, wobei nach erfolgter Kontaktierung der Anschlussleitungen (Lₙ) innerhalb des Anschlussgehäuses (4) dieses einen für beide Anschlusskabel (K₁, K₂) gemeinsamen Steckverbinder darstellt, so dass mittels des Anschlussgehäuses (4) beide Anschlusskabel (K₁, K₂) gemeinsam und zeitgleich mit dem Elektronikgehäuse (3) steckkontaktierbar sind, und wobei die Verknüpfung zwischen den Anschlusskabeln (K₁, K₂) oder der von diesen geführten Anschlussleitungen (Lₙ) auch bei gelöster Steckverbindung zwischen dem Anschlussgehäuse (4) und dem Elektronikgehäuse (3) erhalten bleibt.

2. Elektromotorisches Antriebssystem (1) nach Anspruch 1, wobei die Anschlusskabel (Kₙ) eine Anzahl von Versorgungsleitungen (L₁₁ bis L₁ₙ, L₂₁ bis L₂ₙ) für niedrige Gleichspannungen führen.

3. Elektromotorisches Antriebssystem (1) nach Anspruch 1 oder 2, wobei die Anschlusskabel (Kₙ) eine Anzahl von Signal- und/oder Datenleitungen führen.

4. Elektromotorisches Antriebssystem (1) nach einem der Ansprüche 1 bis 3, wobei das Anschlussgehäuse (4) auf der deren Steckkontaktseite (9) abgewandten Frontseite (8, 18) zumindest zwei Kabelöffnungen (17) zur Durchführung der Anschlusskabel (Kₙ) in das Anschlussgehäuse (4) aufweist.

5. Elektromotorisches Antriebssystem (1) nach einem der Ansprüche 1 bis 4, wobei als Steck- und Gegensteckverbindung (11 bis 16) vorgesehen sind:
- eine einzige, insbesondere zweipolige, Steckverbindung (11a, 11b) für eine Zwischenkreisgleichspannung, insbesondere größer 50V_{DC}, vorzugsweise 60V_{DC} bis 760V_{DC},
- eine einzige, insbesondere dreipolige, Steckverbindung (12a, 12b) für eine Versorgungsgleichspannung, insbesondere kleiner 50V_{DC}, vorzugsweise 24V_{Dc},
- eine Steckverbindung (14a, 14b) für einen Feldbuseingang,
- eine Steckverbindung (16a, 16b) für einen Feldbusausgang, und/oder
- eine Steckverbindung (15a, 15b) für einen Digitaleingang und einen Digitalausgang.

## Claims

1. Electromotive drive system (1) having a motor housing (2) and having an electronics housing (3) arranged on the motor side, and having a connection housing (4) that is releasably plug-contacted to said electronics housing (3) for connecting connection lines (Lₙ), wherein the connection housing (4) has a plug contact side (9) having a number of plug connections (11a to 16a) and a connection side (8, 18), and wherein the electronics housing (3) has a housing side (10) facing towards the plug contact side (9) having counter plug connections (11b to 16b) corresponding to plug connections (11a to 16a),
**characterised in that**
- the connection side (8, 18) of the connection housing (4) has connection openings (17) for at least two connection cables (K₁, K₂) each containing connection lines (Lₙ),
- a connection circuit board (21) is provided inside the connection housing (4), on which connection circuit board (21) the two connection cables (K₁, K₂) are guided, wherein the contacting of the connection lines (Lₙ) of the two connection cables (K₁, K₂) with the plug connections (11a to 16a) takes place inside the housing, and
- the connection housing (4) is provided and set up to loop through at least one energy supply of the drive system (1) from one of the two connection cables (K₁, K₂) to the other of the two connection cables (K₁, K₂) by a through contacting of the connection cables (K₁, K₂) or the connection lines (Lₙ) guided by these taking place inside the connection housing (4), wherein, after the contact of the connection lines (Lₙ) has taken place inside the connection housing (4), this represents a plug connector that is common for the two connection cables (K₁, K₂), such that the two connection cables (K₁, K₂) can be plug-contacted together and at the same time as the electronics housing (3) by means of the connection housing (4), and wherein the coupling between the connection cables (K₁, K₂) or the connection lines (Lₙ) guided by these also remains constant when the plug connection between the connection housing (4) and the electronics housing (3) is released.

2. Electromotive drive system (1) according to claim 1, wherein the connection cables (Kₙ) guide a number of supply lines (L₁₁ to L₁ₙ, L₂₁ to L₂ₙ) for low DC voltages.

3. Electromotive drive system (1) according to claim 1 or 2, wherein the connection cables (Kₙ) guide a number of signal and/or data lines.

4. Electromotive drive system (1) according to one of claims 1 to 3, wherein, on the front side (8, 18) facing away from its plug contact side (9), the connection housing (4) has at least two cable openings (17) for guiding through the connection cables (Kₙ) into the connection housing (4).

5. Electromotive drive system (1) according to one of claims 1 to 4, wherein the following are provided as a plug and counter-plug connection (11 to 16):
- a single, in particular bipolar, plug connection (11a, 11b) for an intermediate circuit DV voltage, in particular greater than 50V_{DC}, preferably 60V_{DC} to 760V_{DC},
- a single, in particular tripolar, plug connection (12a, 12b) for a supply DC voltage, in particular less than 50V_{DC}, preferably 24V_{DC},
- a plug connection (14a, 14b) for a fieldbus input,
- a plug connection (16a, 16b) for a fieldbus output, and/or
- a plug connection (15a, 15b) for a digital input and a digital output.

## Revendications

1. Système d'entraînement par moteur électrique (1), comprenant un carter de moteur (2) et un boîtier électronique (3) disposé côté moteur, ainsi qu'un boîtier de raccordement (4) mis en contact avec celui-ci par enfichage réversible afin de raccorder des lignes de raccordement (Lₙ), le boîtier de raccordement (4) présentant une face de contact par fiches (9) avec un certain nombre de raccordements par fiches (11a à 16a) et une face de raccordement (8, 18), et le boîtier électronique (3) présentant une face de boîtier (10) dirigé vers la face de contact par fiches (9) et muni de raccordements par fiches complémentaires (11b à 16b) correspondant à des raccordements par fiches (11a à 16a),
**caractérisé,**
- **en ce que** la face de raccordement (8, 18) du boîtier de raccordement (4) présente des ouvertures de raccordement (17) pour au moins deux câbles de raccordement (K₁, K₂) contenant chacun des lignes de raccordement (Lₙ),
- **en ce qu'**il est prévu à l'intérieur du boîtier de raccordement (4) une carte de circuit imprimé de raccordement (21) à laquelle sont raccordés les deux câbles de raccordement (K₁, K₂), la mise en contact des lignes de raccordement (Ln) des deux câbles de raccordement (K₁, K₂) avec les raccordements par fiches (11a à 16a) étant réalisée à l'intérieur du boîtier, et
- **en ce que** le boîtier de raccordement (4) est prévu et configuré en vue de boucler au moins une alimentation en énergie du système d'entraînement (1) de l'un des deux câbles de raccordement (K₁, K₂) à l'autre des deux câbles de raccordement (K₁, K₂) en réalisant une mise en contact à l'intérieur du boîtier de raccordement (4) des câbles de raccordement (K₁, K₂) ou les lignes de raccordement (Lₙ) guidées par ceux-ci, le boîtier de raccordement (4) constituant un connecteur à fiches commun aux deux câbles de raccordement (K₁, K₂) après que les lignes de raccordement (Lₙ) ont été mises en contact à l'intérieur de celui-ci, de sorte qu'au moyen du boîtier de raccordement (4), les deux câbles de raccordement (K₁, K₂) peuvent être mis en contact par fiches ensemble et simultanément avec le boîtier électronique (3), et le raccordement entre les câbles de raccordement (K₁, K₂) ou les lignes de raccordement (Lₙ) guidés par ceux-ci est maintenu même lorsque la raccordement par fiches entre le boîtier de raccordement (4) et le boîtier électronique (3) est déconnecté.

2. Système d'entraînement par moteur électrique (1) selon la revendication 1, dans lequel les câbles de raccordement (Kₙ) portent un certain nombre de lignes d'alimentation (L₁₁ à L₁ₙ, L₂₁ à L₂ₙ) pour des basses tensions continues.

3. Système d'entraînement par moteur électrique (1) selon la revendication 1 ou 2, dans lequel les câbles de raccordement (Kₙ) portent un certain nombre de lignes de signaux et/ou de données.

4. Système d'entraînement par moteur électrique (1) selon l'une des revendications 1 à 3, dans lequel le boîtier de raccordement (4) présente au moins deux ouvertures de câble (17) sur la face frontale (8, 18) opposée à sa face de contact par fiches (9) pour le passage des câbles de raccordement (Kₙ) dans le boîtier de raccordement (4).

5. Système d'entraînement par moteur électrique (1) selon l'une des revendications 1 à 4, dans lequel sont prévus en tant que raccordement par fiches et raccordements par fiches complémentaires (11 à 16) :
- un unique raccordement par fiches (11a, 11b), notamment à deux pôles, pour une tension continue de circuit intermédiaire, en particulier supérieure à 50 V_{DC}, de préférence de 60 V_{DC} à 760 V_{DC},
- un unique raccordement par fiches (12a, 12b), en particulier à trois pôles, pour une tension continue d'alimentation, en particulier inférieure à 50 V_{DC}, de préférence 24 V_{DC},
- un raccordement par fiches (14a, 14b) pour une entrée de bus de terrain,
- un raccordement par fiches (16a, 16b) pour une sortie de bus de terrain, et/ou
- un raccordement par fiches (15a, 15b) pour une entrée numérique et une sortie numérique.
